# FASCICULE DE BREVET EUROPEEN

(11) **EP 2 557 975 B1**
(45) Date de publication et mention de la délivrance du brevet: **04.06.2014**
(21) Numéro de dépôt: 11730366.9
(22) Date de dépôt: 12.04.2011
(51) Int. Cl.: A47J 45/06

(54) **POIGNÉE PIVOTANTE POUR RECIPIENT DE CUISSON COMPORTANT UN VERROU RETRACTABLE DANS LE MOYEU**
SCHWENKGRIFF FÜR EIN KOCHGEFÄSS MIT EINZIEHBARER VERRIEGELUNG IN DER NABE
PIVOTING HANDLE FOR COOKING VESSEL HAVING A RETRACTABLE LOCK IN THE HUB

(30) Priorité: 13.04.2010 FR 1052802
(43) Date de publication de la demande: 20.02.2013
(73) Titulaire: SEB S.A., 69130 Ecully (FR)
(72) Inventeur: RHETAT, Eric, F-21000 Dijon (FR); CARTIGNY, Michel, Pierre, F-21310 Mirebeau (FR)
(74) Mandataire: Martin, Didier Roland Valéry
(86) Numéro de dépôt international: PCT/FR2011/050833
(87) Numéro de publication internationale: WO 2011/128576

(56) Documents cités:
- EP-A1- 0 247 229
- EP-A1- 1 800 581
- FR-A1- 2 883 153
- FR-A1- 2 898 030
- US-B1- 6 173 860

## Description

### DOMAINE TECHNIQUE

La présente invention se rapporte au domaine technique général des récipients de cuisine de toutes sortes destinés à être utilisés pour la préparation ou la cuisson d'aliments, et plus particulièrement aux récipients pourvus d'une ou plusieurs poignées pivotantes susceptibles d'occuper alternativement une position de préhension et une position de repos destinées par exemple à faciliter le rangement du récipient.

La présente invention concerne plus particulièrement une poignée pivotante de récipient de cuisine, ladite poignée comprenant une embase de fixation permettant de fixer ladite poignée sur la paroi du récipient, ainsi qu'un organe de préhension qui est maintenu à ladite embase de fixation au moyen d'au moins un premier tourillon autour duquel il peut basculer alternativement d'une première position angulaire de préhension, dans laquelle il permet à un utilisateur de manipuler le récipient, à une seconde position angulaire de repos distincte de la première position angulaire, et inversement, ladite poignée étant pourvue d'au moins un premier verrou monté mobile alternativement entre une position de verrouillage d'une part, dans laquelle il empêche l'organe de préhension de passer de sa première position angulaire de préhension à sa seconde position angulaire de repos, et une position de libération d'autre part, distincte de la position de verrouillage, dans laquelle il autorise le passage de l'organe de préhension de sa première à sa seconde position angulaire.

La présente invention concerne également un récipient de cuisine pourvu d'une poignée pivotante conforme à l'invention.

### TECHNIQUE ANTERIEURE

Il est connu de doter les récipients de cuisine, et notamment les plats, faitouts, sauteuses, ou encore autocuiseurs, de poignées pivotantes, généralement disposées par paire de part et d'autre en saillie sur la paroi externe du récipient, lesdites poignées étant susceptibles d'occuper alternativement une position relevée, dans laquelle elles s'étendent sensiblement dans le prolongement radial du récipient, et une position de repos dans laquelle elles sont rabattues, généralement verticalement, afin de limiter l'encombrement du récipient et d'en faciliter ainsi le rangement.

Afin d'assurer la sécurité de l'utilisateur lors de la manipulation du récipient, il a également été prévu des moyens de verrouillage qui permettent de verrouiller la poignée lorsqu'elle se trouve dans sa position relevée, par exemple au moyen d'une languette élastique formant un cliquet à l'encontre d'une surface d'arrêt qui peut être ménagée sur l'embase ou sur l'anse de la poignée.

Bien qu'elles donnent généralement satisfaction, de telles poignées pivotantes peuvent toutefois souffrir de certains inconvénients.

En particulier, certains moyens de verrouillage connus peuvent présenter un risque de déverrouillage accidentel par l'utilisateur lors de la manipulation du récipient, notamment lorsqu'un effort trop appuyé est exercé par inadvertance sur la poignée, ce qui est bien entendu préjudiciable à la sécurité dudit utilisateur.

Parfois, une certaine fragilité ou une trop grande complexité des composants de la poignée et du mécanisme de verrouillage peuvent également causer des défaillances susceptibles d'empêcher le verrouillage ou de compromettre la fiabilité de ce dernier.

En outre, les moyens de verrouillage connus peuvent parfois s'encrasser ou être détériorés par l'usage courant du récipient, et notamment par l'exposition aux débris d'aliments, à l'eau, aux effluves de cuisson, aux détergents ou encore aux chocs, ce qui peut compromettre leur fonctionnement et leur fiabilité.

Par ailleurs, le mécanisme de verrouillage de certaines poignées connues peut se révéler relativement encombrant et disgracieux.

Enfin, l'agencement de certains moyens de verrouillages connus rend parfois leur manipulation malaisée, voire dangereuse pour l'utilisateur, en exposant par exemple ce dernier à un risque de pincement des doigts ou de la paume de la main.

Des poignées pivotantes selon l'art antérieur sont par exemple décrites dans les documents EP 0247229 A1 et EP 1800581 A1.

### EXPOSE DE L'INVENTION

Les objets assignés à la présente invention visent par conséquent à remédier aux inconvénients susmentionnés et à proposer une nouvelle poignée pivotante de récipient de cuisine présentant une fiabilité et une longévité accrues, tout en étant de conception particulièrement simple et compacte.

Un autre objet assigné à l'invention vise à proposer une nouvelle poignée pivotante dont la fabrication, l'assemblage voire la remise en état soient simples et peu onéreux.

Un autre objet assigné à l'invention vise à proposer une nouvelle poignée pivotante dont le fonctionnement soit particulièrement simple, intuitif et sûr.

Un autre objet assigné à l'invention vise à proposer une nouvelle poignée pivotante présentant une bonne finition et un aspect extérieur soigné.

Un autre objet assigné à l'invention vise à proposer une nouvelle poignée pivotante possédant un verrouillage renforcé dans sa position de service.

Un autre objet assigné à l'invention vise à proposer un nouveau récipient de cuisine robuste, fiable et compact, dont l'utilisation et la manipulation, et notamment le rangement, sont facilités, particulièrement intuitifs et sûrs.

Les objets assignés à l'invention sont atteints à l'aide d'une poignée pivotante de récipient de cuisine, ladite poignée comprenant une embase de fixation permettant de fixer ladite poignée sur la paroi du récipient, ainsi qu'un organe de préhension qui est maintenu à ladite embase de fixation au moyen d'au moins un premier tourillon autour duquel il peut basculer alternativement d'une première position angulaire de préhension, dans laquelle il permet à un utilisateur de manipuler le récipient, à une seconde position angulaire de repos distincte de la première position angulaire, et inversement, ladite poignée étant pourvue d'au moins un premier verrou monté mobile alternativement entre une position de verrouillage d'une part, dans laquelle il empêche l'organe de préhension de passer de sa première position angulaire de préhension à sa seconde position angulaire de repos, et une position de libération d'autre part, distincte de la position de verrouillage, dans laquelle il autorise le passage de l'organe de préhension de sa première à sa seconde position angulaire, ladite poignée étant caractérisée en ce que le premier tourillon comporte un logement de dégagement à l'intérieur duquel le premier verrou peut se retirer, en opérant un transfert au moins partiel vers l'intérieur dudit logement de dégagement, afin de passer de sa position de verrouillage à sa position de libération.

Les objets assignés à l'invention sont également atteints à l'aide d'un récipient de cuisine pourvu d'une poignée pivotante conforme à l'invention.

### DESCRIPTIF SOMMAIRE DES DESSINS

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue de dessus, un récipient de cuisine pourvu de deux poignées correspondant à une première variante de réalisation conforme à l'invention, l'une relevée en position de préhension et l'autre rabattue en position de repos.
- La figure 2 illustre, selon une vue latérale partielle en coupe, le récipient de cuisine représenté sur la figure 1.
- Les figures 3 et 4 illustrent, selon des vues en perspective partielle, respectivement éclatée et assemblée, l'assemblage sur un récipient de cuisine, en position de préhension, d'une poignée pivotante selon la première variante de réalisation correspondant à celle des figures 1 et 2.
- Les figures 5 et 6 illustrent, respectivement selon des vues en perspective et en coupe de côté, une seconde variante de réalisation de poignée conforme à l'invention, en position de préhension.
- La figures 7 et 8 illustrent, selon des vues partielles en coupe, respectivement de dessus et de côté, une troisième variante de réalisation de poignée pivotante conforme à l'invention.

### MEILLEURE MANIERE DE REALISER L'INVENTION

La présente invention se rapporte à une poignée pivotante 1 de récipient 2 de cuisine, laquelle est bien entendue susceptible d'être adaptée sans restriction à de nombreux types de récipients destinés à la préparation, à la présentation ou à la cuisson des aliments, tels que plats, sauteuses, casseroles, marmites, faitouts, autocuiseurs, etc.

A cet effet, la poignée 1 comprend une embase de fixation 3 qui permet de la fixer sur la paroi 4 du récipient 2.

De préférence, l'embase 3 permettra la fixation de la poignée 1 au récipient 2 sans qu'il soit nécessaire de percer ni de traverser la paroi 4.

A ce titre, bien qu'il soit envisageable que ladite embase 3 soit venue de matière avec la paroi 4, ou irréversiblement fixée sur celle-ci, ladite embase 3 constituera de préférence une pièce rapportée, avantageusement assemblée sur la paroi 4 de façon démontable.

A cet effet, on pourra employer par exemple une vis de fixation 7 venant en prise dans une bride 8 filetée faisant saillie sur la paroi, et de préférence rapportée par exemple par soudage sur cette dernière, de sorte à plaquer ladite embase 3 contre ladite paroi 4.

Dans ce qui suit, on considérera de préférence que l'embase 3 forme un référentiel fixe.

Le récipient 2 pourra bien entendu être de forme quelconque, la paroi 4 pouvant notamment s'enrouler en suivant un contour fermé C autour d'un axe générateur, qui correspond de préférence à la direction verticale (ZZ') et pourra être assimilée à celle-ci dans ce qui suit, pour former sensiblement un cylindre dont la base, délimitant le fond du récipient, pourra être par exemple sensiblement circulaire, ovale, polygonale, etc.

Par ailleurs, la poignée comporte un organe de préhension 5, dont la forme n'est, bien entendu, nullement limitée, dès lors que ce dernier permet la saisie de la poignée en vue de la manipulation du récipient 2.

Ainsi, ledit organe de préhension 5 pourra notamment être formé par un manche, qui pourra être allongé et sensiblement rectiligne ou au contraire incurvé.

Préférentiellement, ledit organe de préhension 5 sera formé par une anse 6, présentant de préférence à ses extrémités 6A, 6B des renflements, par exemple sensiblement cylindriques, et avantageusement reliée par chacune desdites extrémités 6A, 6B à l'embase 3, de part et d'autre de cette dernière, tel que cela est illustré sur les figures, en dessinant un contour sensiblement fermé, par exemple annulaire ou ellipsoïde.

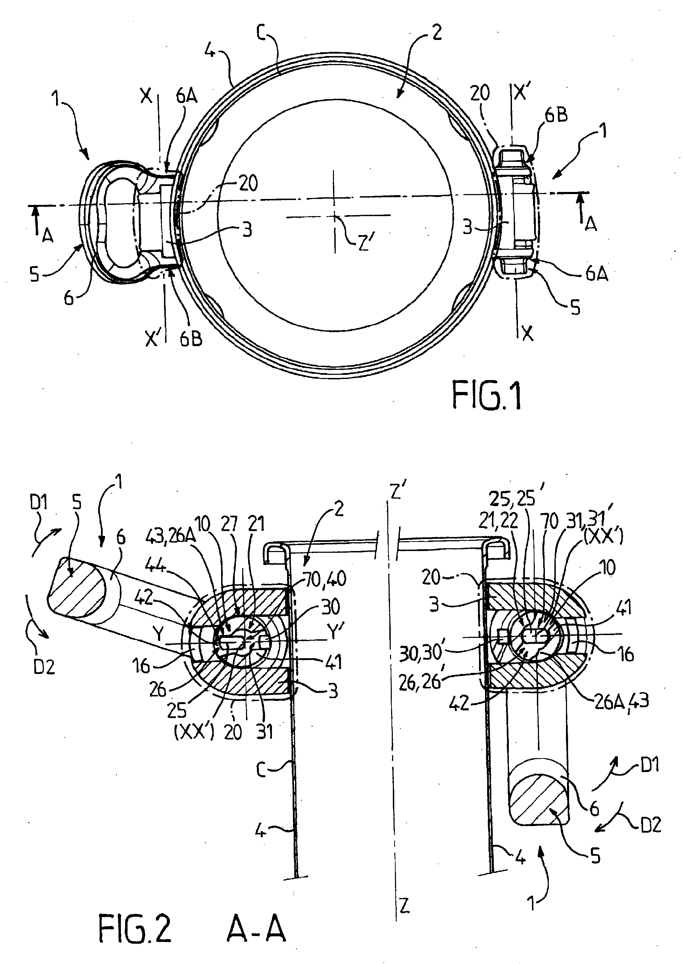

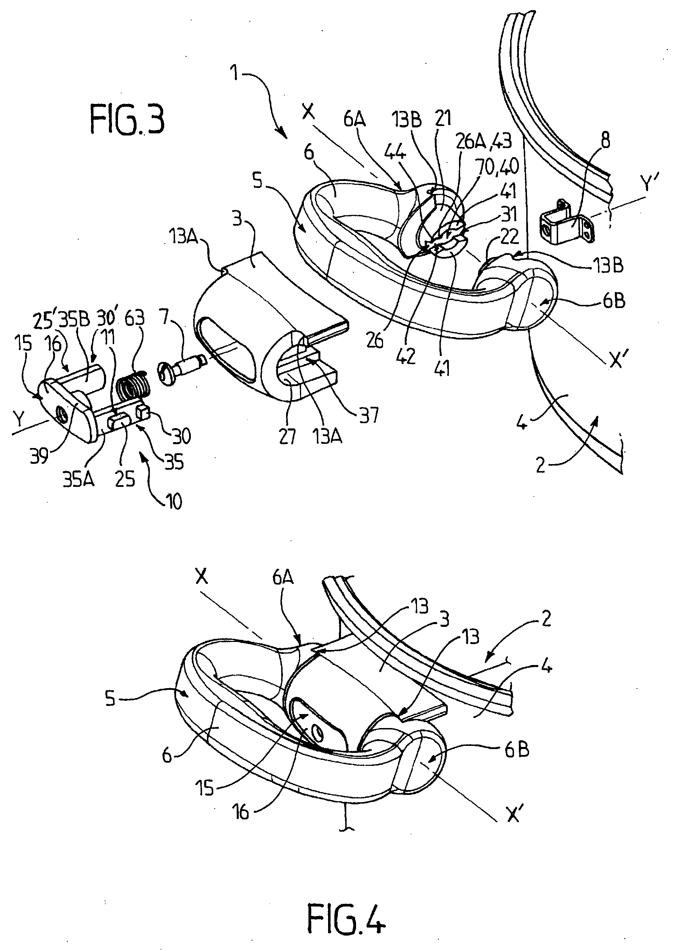

Selon l'invention, l'organe de préhension 5 est monté sur ladite embase de fixation 3 de sorte à pouvoir basculer alternativement d'une première position angulaire de préhension, tel que cela est illustré sur la partie gauche des figures 1 et 2 ainsi que sur les figures 4, 5, et 6, première position dans laquelle il permet à un utilisateur de manipuler le récipient 2, à une seconde position angulaire de repos, distincte de la première position angulaire, et représentée notamment sur la partie droite des figures 1 et 2.

Bien entendu, ce basculement sera avantageusement réversible, ledit organe de préhension 5 étant inversement apte à passer de la seconde position angulaire à la première lorsque la poignée 1 est convenablement actionnée par cet effet par l'utilisateur.

Bien entendu, l'invention n'est nullement limitée à une orientation particulière de basculement, pas plus qu'à des première et seconde positions angulaires spécifiques.

Toutefois, la première position angulaire de préhension correspondra de préférence à une position dans laquelle l'organe de préhension 5, et plus particulièrement l'anse 6 s'étend sensiblement suivant une direction radiale par rapport à l'axe générateur du récipient, tandis que la seconde position de repos correspondra sensiblement à une position non radiale.

A ce titre, il est envisageable que, selon une variante de réalisation non représentée, le basculement puisse s'opérer sensiblement autour d'un axe vertical, de telle sorte que la trajectoire de l'organe de préhension soit sensiblement contenue dans un plan horizontal, et que ledit organe de préhension puisse évoluer d'une première position où il se trouve sensiblement « *en drapeau* » orthogonalement à la paroi sensiblement parallèle à la direction verticale, jusqu'à une seconde position angulaire correspondant à une configuration dans laquelle l'organe de préhension 5 est rabattu de façon sensiblement tangentielle par rapport au contour C de la paroi 4.

Toutefois, ledit basculement s'opérera de préférence sensiblement autour d'un axe (XX') sensiblement horizontal et de préférence sensiblement tangent au contour C, de telle sorte que lorsque l'organe de préhension 5 est placé dans sa position angulaire de repos, il pend sensiblement verticalement le long de la paroi 4, tandis que la première position angulaire correspond de préférence à une position dans laquelle l'anse 6 s'étend, depuis l'embase vers sa portion libre, sensiblement le long d'un plan horizontal ou légèrement ascendant, et par exemple selon une direction sensiblement comprise entre -10 degrés sous le plan horizontal et +20 degrés à +30 degrés au-dessus du plan horizontal.

Avantageusement, dans l'un et l'autre cas, le passage de la première à la seconde position angulaire permet de réduire l'encombrement hors-tout de la poignée 1, et plus globalement du récipient 2, ce qui facilite notamment la mise au lave-vaisselle ou encore le rangement de ce dernier.

Selon l'invention, l'organe de préhension est maintenu à l'embase de fixation 3 au moyen d'au moins un premier tourillon 21, autour duquel il peut basculer alternativement de la première à la seconde position angulaire et réciproquement.

Par « *tourillon* », on désigne tout organe mâle permettant de constituer une liaison basculante captive entre l'embase 3 et l'organe de préhension 5, c'est-à-dire assurant d'une part le couplage permanent entre l'embase et l'organe de préhension porté par cette dernière, et d'autre part l'articulation fonctionnelle relative de ces éléments.

Avantageusement, ledit premier tourillon 21 matérialise l'axe de basculement (XX'), qui correspond préférentiellement à un axe de rotation, et qui permet de fixer l'anse 6 sur l'embase 3.

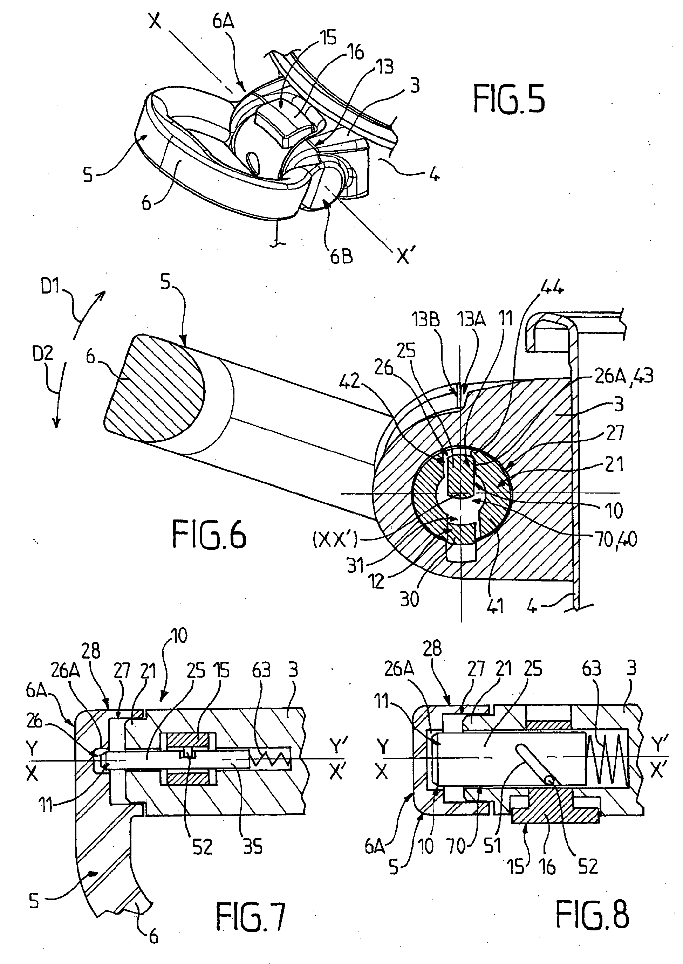

Bien entendu, l'agencement dudit premier tourillon 21 n'est nullement limité, ce dernier pouvant notamment, selon une variante de réalisation correspondant aux figures 7 et 8, être solidaire de l'embase 3, voire être venu de matière avec cette dernière de sorte à former des portées cylindriques sur les bords latéraux de celle-ci, tandis que les extrémités 6A, 6B de l'anse 6 présentent des paliers 27 femelles tels que des canons 28 aptes à venir s'enfiler à libre rotation autour desdites portées.

Toutefois, de façon particulièrement préférentielle, en raison notamment de la simplification des opérations de fabrication et de montage de l'anse 6 sur l'embase 3, le premier tourillon 21 est solidaire du moyen de préhension 5, et de façon particulièrement préférentielle formé d'un seul tenant avec ce dernier, le moyen de préhension 5 portant ainsi l'organe mâle de la liaison pivot.

Le premier tourillon 21, porté par le moyen de préhension 5, pourra alors avantageusement être engagé et guidé dans un palier 27 ménagé dans l'embase 3, et plus particulièrement d'un palier lisse étagé obtenu par moulage, alésage ou rainurage, tel que cela est illustré sur les figures 3 et 6.

Quel que soit le mode de réalisation envisagé, la poignée 1 pourra comprendre au moins un premier et un second tourillon 21, 22, sensiblement coaxiaux et disposés de préférence de part et d'autre de l'embase.

Ainsi, l'anse 6 pourra être pourvue à chacune de ses extrémités 6A, 6B d'un bossage destiné à former un tourillon 21, 22, soit éventuellement d'un fût destiné à accueillir solidairement un tel tourillon rapporté, par exemple par emmanchement.

Par ailleurs, la poignée 1 est également pourvue de moyens de retenue 10 conçus pour pouvoir s'opposer au passage dudit organe de préhension 5 de la première position angulaire de préhension vers, et en particulier jusqu'à, la seconde position angulaire de repos.

Avantageusement, lesdits moyens de retenue 10 évitent le basculement accidentel ou intempestif de l'organe de préhension 5 vers sa position de repos, ce qui permet une saisie et une manipulation du récipient faciles et sûres.

A ce titre, la poignée conforme à l'invention est pourvue d'au moins un premier verrou 25 qui est monté mobile alternativement entre une position de verrouillage d'une part, illustrée sur la partie gauche de la figure 2 et sur les figures 6 à 8, dans laquelle il empêche l'organe de préhension 5 de passer de sa première position angulaire de préhension à sa seconde position angulaire de repos, et une position de libération d'autre part, illustrée sur la partie droite de la figure 2, qui est distincte de la position de verrouillage, et dans laquelle il autorise le passage de l'organe de préhension 5 de sa première à sa seconde position angulaire.

En outre, selon une caractéristique importante de l'invention, le premier tourillon 21 comporte un logement de dégagement 70 à l'intérieur duquel le premier verrou peut se retirer, en opérant un transfert au moins partiel vers l'intérieur dudit logement de dégagement 70, afin de passer de sa position de verrouillage à sa position de libération.

Avantageusement, le logement de dégagement 70 conforme à l'invention est conçu pour accueillir le premier verrou 25 et permettre à ce dernier d'opérer un retrait nécessaire à son passage en position de libération.

Ce retrait se traduit par un transfert, et plus particulièrement un repli, depuis l'extérieur vers l'intérieur dudit logement de dégagement 70, d'au moins une partie de la matière constitutive dudit premier verrou, cette matière constitutive se trouvant en saillie dudit logement de dégagement 70 lorsque le verrou est en position de verrouillage et retournant à l'intérieur dudit logement lorsque le verrou passe en position de libération.

De façon particulièrement avantageuse, un tel logement de dégagement 70, du fait qu'il est ménagé directement au sein du tourillon 21, permet au verrou 25 de se déplacer, et notamment de s'escamoter sensiblement au centre du mécanisme d'articulation de la poignée, ce qui permet de limiter l'encombrement de la poignée 1 et de l'embase 3, et ainsi de gagner en simplicité de conception et en compacité.

De préférence, il sera possible de rappeler en majorité, voire en totalité, le verrou 25 à l'intérieur du logement de dégagement 70. Plus particulièrement, ledit verrou 25 pourra être conçu pour passer d'une configuration saillante à une configuration affleurante ou rentrante par rapport aux limites dudit logement de dégagement, lorsqu'il se retire en position de libération.

De préférence, le premier verrou 25 permettra d'opérer un verrouillage mécanique par contact entre des surfaces solides associées respectivement à l'embase et au moyen de préhension.la poignée comprenant.

A cet effet, la poignée comprendra au moins un premier logement d'appui 26 formant une partie femelle dans laquelle une portion, dite « *portion active* » 11, du premier verrou 25 pénètre pour s'opposer au mouvement de rotation de l'organe de préhension 5 par rapport à l'embase 3, et dont ladite portion active 11 se retire pour libérer ledit mouvement de rotation.

Ainsi, le premier verrou 25 peut se présenter sous forme d'une pièce mobile de type clenche, de préférence apte à se déplacer de manière captive et guidée, et avantageusement destinée à venir au contact contre au moins une face d'appui 26A formant une paroi du logement 26, ladite face d'appui 26A étant avantageusement agencée latéralement par rapport à la direction (YY') de déplacement selon laquelle le premier verrou 25 s'engage dans ledit premier logement 26, afin d'opposer à la rotation du moyen de préhension un effort de retenue sensiblement transverse à ladite direction (YY').

Dans ce qui suit, le premier verrou 25 pourra par conséquent être désigné comme une *« première clenche 25* », sans que cela ne constitue une restriction de l'invention.

Ainsi, le passage en position de libération se traduira par une manoeuvre en retrait de la clenche, le verrou 25 se rétractant dans le logement de dégagement 70 afin d'éloigner suffisamment la portion active 11 pour l'extraire la du logement d'appui 26 et ainsi la dégager de la face d'appui. Bien entendu, le logement 70 sera dimensionné pour autoriser une telle manoeuvre de recul, et pour pouvoir accueillir le surcroît de volume correspondant sensiblement au volume de la portion du verrou 25 dont le déplacement est nécessaire.

De préférence, les moyens de retenue 10, et plus particulièrement le premier verrou 25, sont conçus pour maintenir sensiblement l'organe de préhension 5 dans sa première position angulaire, et forment de façon particulièrement préférentielle des moyens anti-retour permettant de verrouiller ledit organe de préhension 5 par rapport à l'embase 3 dans sa première position angulaire, au moins à l'encontre du sens de déplacement allant de ladite première position angulaire vers la seconde position angulaire.

En outre, lesdits moyens de retenue 10 forment de préférence des moyens anti-retour automatiques, le premier verrou 25 étant agencé pour s'engager spontanément en position de verrouillage lorsque l'organe de préhension 5 est amené sensiblement jusqu'à, ou atteint, sa première position angulaire de préhension.

A cet effet, le premier verrou 25 est de préférence sollicité vers sa position de verrouillage, directement ou indirectement, par un organe de précontrainte élastique 63, tel qu'un ressort hélicoïdal.

Par ailleurs, la poignée 1 peut également comporter une butée d'arrêt 13 faisant obstacle au déplacement opposé de l'organe de préhension 5, c'est-à-dire allant de la seconde vers la première position angulaire, lorsque ledit organe de préhension 5 se trouve dans ladite première position angulaire.

En d'autres termes, ladite butée d'arrêt 13 permet avantageusement d'interrompre et de bloquer le mouvement dudit organe de préhension 5 lorsque celui-ci est relevé jusqu'à atteindre sa position de préhension.

Bien entendu, il est envisageable d'utiliser à cet effet tout système de came ou d'ergot permettant à l'organe de préhension 5 de venir en appui contre la paroi 4 ou le couvercle du récipient (non représenté).

Toutefois, ladite butée d'arrêt 13 sera de préférence formée, tel que cela est illustré sur les figures, au moyen d'un épaulement 13A ménagé dans l'embase 3 et contre lequel vient buter un élément saillant 13B de l'extrémité de l'anse 6 correspondante.

De préférence, afin d'éviter tout mouvement intempestif de l'organe de préhension 5, les moyens de retenue 10, et plus particulièrement le verrou 25, seront placés sous la dépendance d'un organe de commande 15 actionnable, et donc contrôlable, par l'utilisateur.

De façon particulièrement préférentielle, et afin d'assurer une sécurité d'utilisation à la fois intuitive et optimale, l'organe de commande 15 sera distinct de l'organe de préhension 5.

En outre, la poignée pouvant comporter plusieurs verrous 25, 30, 25', 30', l'organe de commande sera de préférence unique, afin d'offrir une commande centralisée permettant de commander simultanément, le cas échéant, l'ensemble desdits verrous.

De préférence, l'organe de commande 15 comportera un bouton-poussoir 16, de préférence unique, avantageusement disposé pour être aisément accessible et manoeuvrable par l'utilisateur, par exemple en position sensiblement centrale sur l'embase 3, entre les extrémités 6A, 6B de l'anse 6.

Bien entendu, l'agencement du verrou 25 et du logement d'appui 26 ne sont nullement limités à une variante de réalisation particulière.

En particulier, tel que cela est illustré sur les figures 7 et 8, le premier verrou 25 pourra être conçu pour se déplacer au moins selon une composante axiale sensiblement parallèle à l'axe (XX') du premier tourillon 21 autour duquel s'opère le basculement de l'organe de préhension 5, sinon essentiellement voire exclusivement selon une telle composante axiale, de façon colinéaire à l'axe (XX').

Ainsi, ledit verrou 25 pourra avantageusement rentrer et ressortir alternativement en bout dudit premier tourillon 21, lui-même venu de matière, c'est-à-dire formé d'un seul tenant, avec l'embase 3, depuis un logement de dégagement 70 de préférence formé par une fente sensiblement parallèle à l'axe (XX') et centrée sur ce dernier, afin de venir en prise dans un logement d'appui 26, lui-même formé par une empreinte creusée dans l'organe de préhension 5, ou à tout le moins dans une pièce solidaire à rotation dudit organe de préhension 5, et plus particulièrement dans la paroi de fond du canon 28 de l'anse 6, en vis-à-vis du logement de dégagement 70, à distance de ce dernier, et sensiblement dans le prolongement axial du tourillon 21.

Le premier verrou 25 pourra ainsi avantageusement s'enclencher et verrouiller la poignée en position en s'extrayant au moins en partie du logement de dégagement 70 ménagé dans l'embase pour se placer en saillie, ou s'avancer davantage en saillie, axialement au-delà de la face terminale du tourillon, selon une amplitude suffisante pour atteindre l'organe de préhension et s'engager dans le logement d'appui 26 correspondant.

Le verrou 25 pourra par exemple se présenter sous la forme d'une langue sensiblement parallélépipédique, ou, s'il est excentré par rapport à l'axe (XX'), sous la forme d'une goupille cylindrique.

Toutefois, selon une caractéristique préférentielle correspondant aux variantes de réalisation des figures 1 à 6, le premier verrou 25 sera conçu pour se déplacer au moins selon une composante radiale sensiblement transverse à l'axe (XX') du premier tourillon 21, sinon essentiellement voire exclusivement selon une telle composante radiale.

Plus particulièrement, le déplacement du verrou 25 pourra être sensiblement rectiligne et perpendiculaire audit axe (XX') du tourillon, et de préférence sensiblement centré sur celui-ci, la trajectoire du verrou 25 passant alors par ledit axe (XX'), tel que cela est illustré sur les figures 2 et 6.

Par ailleurs, bien qu'il soit envisageable que les moyens de retenue 10 comportent un unique verrou 25, ces derniers comportent de préférence au moins un premier verrou 25 mobile et un second verrou 25', 30, 30' (seconde clenche) mobile qui coopèrent respectivement avec un premier logement d'appui 26 et un second logement d'appui 26', 31, 31', les caractéristiques du second verrou 25', 30 et du second logement d'appui 26', 31 se déduisant de préférence *mutatis mutandis* des caractéristiques du premier verrou 25 et du premier logement d'appui 26.

De préférence, la poignée pivotante 1 présentera un agencement sensiblement symétrique, et plus particulièrement une symétrie par rapport au plan sagittal sensiblement vertical et passant par l'axe générateur du récipient (ZZ'), dans lequel chacun des deux tourillons 21, 22 coopère avec, respectivement, la première clenche 25 et la seconde clenche 25' qui contrôle sa mobilité.

De préférence, le ou les verrous 25, 25', 30, 30' sont portés par, et notamment venus de matière avec, un ou plusieurs coulisseaux 35 qui sont guidés à translation, de préférence par l'embase 3 et à l'intérieur de cette dernière.

Dans les variantes représentées sur les figures 1 à 6, le coulisseau 35 est radial, c'est-à-dire guidé à translation selon une direction sensiblement transverse, voire perpendiculaire à l'axe (XX') du tourillon 21, 22.

A l'inverse, selon une caractéristique qui peut constituer une invention à part entière, le ou les coulisseaux 35 peuvent être axiaux c'est-à-dire guidés à translation selon une direction sensiblement colinéaire à l'axe (XX') du tourillon 21, 22, et de façon particulièrement préférentielle de façon sensiblement coaxiale à ce dernier, tel que cela est le cas pour la variante de réalisation illustrée sur les figures 7 et 8.

Par ailleurs, il est envisageable que la première et la seconde clenche coopèrent et se déplacent sensiblement dans la même direction, de préférence selon des trajectoires sensiblement parallèles voire coaxiales.

En particulier, il est envisageable que deux verrous 25, 30 soient jumelés et portés par un même coulisseau 35, voire sensiblement de même largeur et alignés selon la même direction de déplacement (YY'), tel que cela est le cas au sein de la première et de la seconde variante de réalisation illustrées sur les figures 1 à 6.

A l'inverse, la première et la seconde clenche pourraient être montées en opposition l'une par rapport à l'autre afin de se déplacer dans des directions sensiblement parallèles voire confondues mais dans des sens opposés.

Bien entendu, l'homme du métier sera libre de combiner l'une ou l'autre des caractéristiques susmentionnées, et par exemple de mettre en oeuvre au sein d'un même tourillon plusieurs clenches montées en opposition, voire en étoile, et destinées à jaillir en saillie sur la surface latérale externe dudit tourillon.

Toutefois, afin de limiter les efforts de miniaturisation nécessaires à la réalisation des moyens de retenue 10 et afin d'assurer un verrouillage fiable et sûr, la mise en oeuvre de clenches montées en opposition sera de préférence réservée à des configurations dans lesquelles les clenches sont mobiles axialement.

Selon une caractéristique préférentielle, le bouton poussoir 16 peut être situé sensiblement dans le prolongement du ou des coulisseaux 35, et plus particulièrement dans le prolongement de la direction de déplacement desdits coulisseaux, et de façon particulièrement préférentielle venu de matière avec lesdits coulisseaux, de telle sorte que ledit bouton poussoir est agencé pour commander, avantageusement de façon directe, le déplacement dudit ou desdits coulisseaux 35.

De préférence, tel que cela est le cas sur la première et la seconde variante de réalisation, le logement de dégagement 70 est formé par un évidement tubulaire, de type manchon, pratiqué en bout dans le moyeu 40 du premier tourillon 21, sensiblement selon l'axe (XX') de ce dernier.

Avantageusement, le verrou premier 25 peut ainsi s'escamoter dans le moyeu 40 ainsi évidé afin d'autoriser la rotation du tourillon 21, 22 autour dudit verrou, et plus particulièrement de sa portion active 11.

Avantageusement, le moyeu 40 offre un dégagement suffisamment spacieux pour accueillir la majorité sinon la totalité dudit verrou 25, ce qui permet à ce dernier d'une part de se rétracter à l'intérieur dudit moyeu pour passer en position de libération autorisant le mouvement rotatif de l'organe de préhension 5, puis de se redéployer ensuite lorsqu'il est nécessaire de verrouiller ledit organe de préhension 5 en position.

De préférence les bords, et notamment les arêtes, du premier verrou 25 sont chanfreinés ou arrondis de sorte à venir s'inscrire dans ledit moyeu 40 sans faire obstacle à la rotation dudit moyeu autour dudit verrou lorsque celui-ci se trouve en position rétractée, tel que cela est illustré sur la partie droite de la figure 2.

En outre, le mouvement d'escamotage comporte de préférence au moins une composante radiale, voire est essentiellement radial, c'est à dire sensiblement transverse à l'axe de rotation (XX') du tourillon, et correspond ainsi sensiblement à un mouvement radial centripète au cours duquel la clenche passe de la périphérie du tourillon vers le centre de ce dernier.

Ainsi, il est envisageable que le verrou 25 ne soit pas embarqué sur un élément mobile en rotation, tel que l'organe de préhension 5 ou le tourillon 21, 22 mais bien au sein de l'embase fixe, et que son mouvement fonctionnel de va-et-vient, qui s'effectue entre sa position de verrouillage et sa position de libération de préférence selon une direction transverse croisant l'axe (XX') du tourillon, soit dissocié du mouvement rotatif d'ensemble de l'organe de préhension 5 et du tourillon 21, 22 autour dudit verrou 25.

De préférence, tel que cela est illustré sur les figures 2, 3 et 6, l'évidement du moyeu 40 est bordé par une jante 41, qui délimite sensiblement un manchon tubulaire.

Avantageusement, cet agencement peut être obtenu en alésant axialement le tourillon 21, 22 à partir de son extrémité, de sorte à former un moyeu 40 évidé sensiblement cylindrique et borgne.

De façon préférentielle, le premier logement d'appui 26 est creusé dans l'épaisseur de la jante 41.

Bien que ledit logement d'appui 26 puisse être formé par une simple encoche borgne creusée à partir de la face interne de la jante 41, ledit logement d'appui 26 est de préférence débouchant, c'est à dire qu'il traverse la paroi de la jante 41 de part en part selon une direction radiale.

A cet effet, ledit logement d'appui 26 est de préférence formé par une rainure longitudinale 42.

En outre, le moyeu 40 est de préférence ouvert sur l'extrémité du tourillon 21, la rainure longitudinale 42 fendant alors de préférence la jante 41, à travers toute son épaisseur (radiale), jusqu'à l'extrémité dudit tourillon 21 selon une direction sensiblement parallèle à l'axe (XX') de rotation de ce dernier.

Selon cet agencement préférentiel, la jante présente un chant 43 bordant la rainure 42, ledit chant 43 formant la paroi d'appui 26A du logement d'appui 26, le long de et contre laquelle le premier verrou 25 peut s'engager lorsqu'il se trouve en position de verrouillage.

De préférence, le coulisseau comporte au moins une première languette 35A sur laquelle fait saillie une protubérance formant le premier verrou 25, et en ce que ladite languette 35A est disposée sensiblement en bout du tourillon 21 de telle sorte que l'évidement tubulaire 70 coiffe ladite première protubérance, cette dernière étant agencée pour s'inscrire à l'intérieur du moyeu, en retrait de la jante 41, sans faire obstacle à la rotation de ladite jante 41 lorsque le premier verrou 25 se trouve en position de libération.

Pour améliorer la stabilité et la robustesse du mécanisme, la protubérance peut présenter une forme massive sensiblement parallélépipédique, plus longue, selon la direction de déplacement (YY'), que large selon une direction radiale transverse à ladite direction (YY'). Avantageusement, la longueur de la protubérance coïncidera sensiblement avec le diamètre interne de la jante, et sa largeur à celle de la rainure 42, déduction faite des jeux nécessaires.

En outre, ledit chant 43 présente, selon une caractéristique qui peut constituer une invention à part entière, une rampe de rattrapage de jeu 44.

Bien entendu, l'orientation de ladite rampe 44 sera définie en fonction de la direction de déplacement de la clenche 25, de telle sorte que la portion active 11 de cette dernière puisse s'engager et progresser sur ladite rampe 44, lors du verrouillage du moyen de préhension 5 en position, afin de compenser, à la manière d'un coin, les éventuels écarts dimensionnels liés à la fabrication et à l'assemblage de la poignée.

Plus particulièrement, tel que cela est illustré sur les figures 2, 3, 6, ladite rampe 44 pourrait être sensiblement contenue dans un plan parallèle à l'axe de rotation (XX') du tourillon, et sécant à la direction radiale transverse audit axe, et plus particulièrement former une sorte de bec s'affinant vers la périphérie de la jante à partir de la surface d'arrêt formée par le chant 43 de ladite jante 41.

De préférence, la rampe 44 peut avantageusement être conçue pour former une butée limitant la translation de la ou des clenches, empêchant ainsi leur éjection, et plus particulièrement l'éjection complète du bouton-poussoir 16 hors de l'embase 3.

Selon une caractéristique préférentielle qui peut constituer une invention à part entière, la première et la seconde clenche 25, 30 peuvent être agencées de sorte à opérer simultanément dans deux logements d'appui 26, 31 distincts, et notamment diamétralement opposés, situés au niveau du même tourillon 21, et plus particulièrement de la même jante 41.

Plus particulièrement, tel que cela est illustré sur les figures 2 et 3, un même coulisseau 35 peut être disposé sensiblement en bout du tourillon 21, 22, à distance ou accolé à ce dernier, et selon une direction sensiblement transverse à son axe (XX'), ledit coulisseau portant, sur une même première languette 35A une première et une seconde protubérance faisant saillie transversalement sur ledit coulisseau, du même côté de la languette et à distance l'une de l'autre, selon une direction sensiblement parallèle à l'axe (XX') du tourillon 21.

La jante 41 peut alors être fendue de part en part de sorte à former un premier et un second logement d'appui 26, 31 diamétralement opposés, afin que le déplacement du coulisseau provoque l'engagement simultané du premier et du second verrou 25, 30, et plus particulièrement de leur première et seconde portions actives 11, 12 respectives, dans le premier et le second logement d'appui 26, 31, respectivement le dégagement simultané desdites portions actives 11, 12 de leurs logements d'appui 26, 31.

Avantageusement, l'espace ménagé entre la première et la seconde protubérance, sur la face du coulisseau, permet quant à lui à la jante 41 entourant la première clenche 25 de se déplacer librement en rotation entre lesdites protubérances lorsque les clenches 25, 30 sont rétractées pour autoriser la libre rotation de l'organe de prévention 5.

Avantageusement, un tel agencement permet de multiplier les points de verrouillage de part et d'autre de l'axe de rotation du tourillon 21, 22, et donc de l'organe de préhension 5, ce qui confère à l'ensemble une grande robustesse et une excellente fiabilité en limitant considérablement les risques de défaillance.

De surcroît, la redondance des appuis garantit une très bonne stabilité au moyen de préhension 5 lorsque celui-ci se trouve dans sa première position angulaire de préhension.

De façon préférentielle, la poignée présentant un agencement sensiblement symétrique, la structure à double clenche décrite ci-dessus se retrouve sensiblement à l'identique aussi bien en regard du premier tourillon 21, situé à gauche sur les figures 4 ou 5, qu'au niveau du second tourillon 22 situé à droite du plan sagittal sur la même figure.

Ainsi, la poignée formant une anse 6 dont chacune des première et seconde extrémités 6A, 6B s'articule sur l'embase au moyen respectivement d'un premier et d'un second tourillon 21, 22, le coulisseau 35 peut comporter une seconde languette 35B portant également au moins une, et de préférence deux protubérances formant un troisième et un quatrième verrou 25', 30' distincts et distants des premier et second verrous, lesdits troisième et quatrième verrous 25', 30' coopérant avec le second tourillon 22, et plus particulièrement avec un troisième et un quatrième logement d'appui 26', 31' avantageusement ménagés dans ce dernier, et ce de préférence selon des agencements qui se déduisent *mutatis mutandis* de ceux desdits premiers et second verrous 25, 30/logements d'appui 26, 31 respectivement.

On peut ainsi obtenir un mécanisme de verrouillage à quatre clenches, particulièrement stable et équilibré.

Avantageusement, tel que cela est bien visible sur la figure 3, le coulisseau 35, et plus particulièrement les languettes 35A, 35B peuvent être guidées par coulissement contre des rails 37 ménagés dans l'embase 3 et solidaires de cette dernière.

De façon particulièrement préférentielle, lesdites languettes forment les deux branches latérales d'un coulisseau de type tiroir en U, dont la traverse 39 de base, de préférence sensiblement perpendiculaire auxdites languettes, forme une entretoise qui peut avantageusement supporter le bouton poussoir 16.

De préférence, le bouton poussoir 16 et la traverse 39 occupent avantageusement une position centrale sur l'embase 3, sensiblement entre les deux tourillons 21, 22, le bouton 16 pouvant avantageusement apparaître de manière affleurante, de sorte à rester protégé de la chaleur du récipient, ou au contraire saillante, de sorte à être particulièrement visible, à travers une fenêtre de forme sensiblement conjuguée, découpée dans la face frontale de ladite embase.

Avantageusement, un tel agencement procure audit bouton-poussoir 16 un guidage lui assurant une bonne stabilité et une bonne fluidité de manoeuvre, et offre de surcroît à l'utilisateur une large surface de pression qui peut s'étendre sur la majeure partie de la largeur frontale de l'embase et qui facilite l'utilisation dudit bouton.

De façon particulièrement avantageuse, selon l'ergonomie que l'on souhaite conférer à la poignée 1, et plus particulièrement selon l'agencement que l'on souhaite conférer au bouton poussoir 16, le mécanisme décrit ci-dessus peut être mis en oeuvre selon une direction sensiblement radiale et horizontale, tel que cela est le cas pour la première variante de réalisation représentée sur les figures 1 à 4, ou au contraire selon une direction sensiblement verticale, tel que cela est le cas pour la seconde variante de réalisation représentée sur les figures 5 et 6.

Par ailleurs, il est remarquable que les première et seconde variantes de réalisation, illustrées sur les figures 1 à 6 facilitent avantageusement le montage de la poignée 1.

En effet, avant de rapporter l'embase 3 sur le récipient 2, il est possible d'introduire le coulisseau 35 dans ladite embase en le repoussant à fond, en position de libération, puis de présenter l'anse à l'arrière de l'embase 3, en vis-à-vis de la paroi destinée à venir en appui contre la paroi 4 du récipient, ladite anse étant renversée, c'est-à-dire pivotée sensiblement d'un demi-tour par rapport à sa position de préhension.

Ainsi, le décrochement 13B de la butée 13 ne fait pas obstacle à l'insertion des tourillons 21, 22 qui peuvent être glissés, depuis l'arrière vers l'avant de l'embase, le long du palier 27, jusqu'à venir en butée contre le fond de ce dernier.

La rainure 42, du fait qu'elle traverse diamétralement la jante 41, permet aux verrous 25, 30 de traverser ladite jante 41 jusqu'à ce que le premier verrou 25 se retrouve au centre du moyeu 40.

Il est alors possible de faire pivoter la poignée d'environ un demi-tour (dans le sens des aiguilles d'une montre sur les figures 3 et 4, pour l'amener dans l'une ou l'autre de ses première et seconde positions angulaires fonctionnelles.

Selon la troisième variante de réalisation illustrée sur les figures 7 et 8, le premier verrou peut être formé par une lame 50 sensiblement parallélépipédique qui se déplace selon une direction sensiblement parallèle audit l'axe (XX') du tourillon 21, 22, voire confondue avec ce dernier.

De préférence, le bouton poussoir 16 sera disposé transversalement à ladite lame 50 et suivra une trajectoire sensiblement radiale par rapport au récipient 2 et à l'axe du tourillon 21, 22, la lame 50 étant à cet effet pourvue d'une rainure 51 oblique, et de préférence sensiblement rectiligne, formant une double rampe qui permet à un doigt de manoeuvre 52 solidaire du bouton poussoir 16 de convertir l'enfoncement, respectivement le retour, dudit bouton poussoir 16 en un mouvement de translation tendant à rétracter, respectivement à déployer le verrou 25.

Selon un mode particulier de réalisation non représenté, la première clenche 25 et la seconde clenche 30 peuvent avantageusement être formées par deux lames 50 sensiblement parallélépipédiques, superposées en appui-plan l'une sur l'autre, et montées en opposition de telle sorte que leurs extrémités peuvent venir s'insérer dans un logement d'appui 26, 31 qui peut être avantageusement formé par une rainure droite ouverte dans la paroi de fond du canon 28 correspondant.

En outre, selon une caractéristique qui peut constituer une invention à part entière, la poignée 1, et plus particulièrement l'un et/ou l'autre des canons 28, respectivement l'un et/ou l'autre des tourillons, peuvent être pourvus de deux logements d'appui, tels que des rainures droites, qui suivent des directions sécantes et forment par exemple globalement, de préférence dans un plan sensiblement normal à l'axe (XX') et en particulier dans la paroi de fond du canon 28 considéré, une empreinte sensiblement cruciforme qui permet à l'une et/ou l'autre clenche 25, 30, et de préférence (au moins) à une même clenche, de verrouiller l'organe de préhension 5 en position aussi bien dans sa première position angulaire de préhension, que dans sa seconde position angulaire de repos.

Avantageusement, le bouton-poussoir 16 peut par exemple former une chape enveloppant les deux lames et possédant deux doigts de manoeuvre 52 opposés, coopérant chacun avec la rainure oblique de l'une des lames, afin de commander le déplacement antagoniste simultané des deux verrous 25, 30.

A ce titre, il est remarquable que, plus globalement, l'organe de précontrainte élastique 63 peut agir directement sur la ou les clenches 25, 30, et de préférence sensiblement dans le prolongement et le sens de déplacement de ces dernières, ou encore, agir principalement sur le bouton 16 qui transmet ensuite cette contrainte aux clenches, soit que ledit bouton soit solidaire desdites clenches, tel que cela est le cas sur la première variante, soit que ledit bouton soit relié auxdites clenches par un quelconque mécanisme de transmission voire de conversion de mouvement.

Bien entendu, l'invention n'est nullement limitée aux variantes de réalisation décrites précédemment, les enseignements contenus dans ce qui précède étant notamment susceptibles d'être isolés et mis en oeuvre indépendamment les uns des autres ou combinés les uns avec les autres.

Par ailleurs, selon une caractéristique préférentielle, il est remarquable que l'organe de préhension 5 et/ou l'embase 3 définissent une enveloppe de protection 20 à l'intérieur de laquelle la portion active 11, 12 des moyens de retenue 10, et plus particulièrement des verrous 25, 30 reste contenue quelle que soit la première ou la seconde position angulaire occupée par l'organe de préhension 5, que l'organe de préhension 5 occupe la première position angulaire, la seconde position angulaire, où bien même toute position intermédiaire comprise entre lesdites première et seconde positions angulaires. Avantageusement, une telle enveloppe de protection 20, qui est suggérée en traits mixtes sur les figures, permet de maintenir sensiblement la portion active 11, 12 à l'abri de l'environnement de la poignée, à l'intérieur du volume occupé et délimité par les surfaces externe de l'organe de préhension 5, de l'embase 3 ou de la combinaison de ces derniers.

Avantageusement, un tel agencement permet de préserver l'intégrité de la portion active 11, 12, sur laquelle repose l'efficacité et la fiabilité du maintien de l'organe de préhension 5 dans sa première position angulaire de préhension, et par conséquent, plus globalement, le bon fonctionnement des moyens de retenue 10.

Il permet de surcroît de limiter les risques de mauvaise manipulation ou de blessure par coupure ou pincement au contact de ladite portion active 11, 12 ou des moyens de retenue 10, dans la mesure où ladite enveloppe restreint l'accès de l'utilisateur à ces organes voire le rend impossible.

Bien entendu, l'agencement de l'enveloppe de protection 20, et par conséquent celui de l'organe de préhension 5, de l'embase 3, et de la jonction qui s'opère entre eux, pourront être adaptés en fonction du degré de protection souhaité et de la nature des éléments extérieurs, tels que des poussières, des projections d'eau, de matière grasse ou d'aliments, des effluves de cuisson, détergents employés pour nettoyer le récipient 2, dont on souhaite protéger, sinon isoler la portion active 11, voire l'intégralité des moyens de retenue 10

En particulier, pour parfaire l'enveloppe de protection 20 au point de constituer une barrière sensiblement voire totalement étanche à l'un et/ou l'autre des éléments extérieurs susmentionnés, il est envisageable de prévoir des garnitures d'étanchéité, telles que des joints plats ou toriques, entre la paroi 4 et l'embase 3, et/ou au niveau des liaisons de l'embase 3 avec les différents organes de la poignée 1, notamment ceux présentant une mobilité par rapport à ladite embase 3.

De façon préférentielle, tel que cela est illustré sur les figures, la portion active 11, et plus globalement les moyens de retenue 10, seront intégralement dissimulés et recouverts par l'organe de préhension 5 et l'embase 3, de préférence par des parois pleines et continues de ces derniers, ce qui, au-delà de l'effet protecteur, améliore la finition et le rendu esthétique de la poignée.

En outre, le bouton poussoir 16 constituant de préférence le seul organe visible et actionnable par l'utilisateur, hormis l'organe de préhension 5 lui-même, l'utilisation de la poignée 1 conforme à l'invention est particulièrement intuitive et sûre.

Par ailleurs, il est remarquable que l'enveloppe de protection 20 peut avantageusement procurer une protection de nature thermique, l'embase 3 formant en particulier un rempart isolant par rapport à la paroi chaude du récipient, ce qui permet d'utiliser, pour former tout ou partie des moyens de retenue 10, des matériaux qui ne sont pas nécessairement résistants aux fortes chaleurs et qui peuvent être meilleur marché.

La présente invention concerne bien entendu un récipient de cuisine 2 en tant que tel, ledit récipient étant pourvu d'au moins une poignée pivotante 1, et de préférence de deux poignées pivotantes conformes à l'invention et présentant tout ou partie des caractéristiques décrites ci-dessus.

De façon particulièrement préférentielle, ledit récipient 2 constituera un appareil de cuisson d'aliments sous pression, du genre autocuiseur domestique, dont les poignées pivotantes seront fixées à l'extérieur de la paroi 4, sans porter atteinte à l'intégrité, et plus particulièrement à l'étanchéité, de l'enceinte de cuisson délimitée par ladite paroi 4.

Le fonctionnement d'une poignée pivotante 1 associée à un récipient 2 conforme à l'invention va maintenant être décrit en référence préférentielle à la première variante de réalisation ainsi qu'à la figure 2.

Initialement, le récipient 2 se présente avec ses poignées 1 rabattues vers le bas, l'organe de préhension 5 occupant la seconde position angulaire de repos, tel que cela est illustré sur la partie droite de la figure 2.

Avantageusement, la première clenche 25 est contenue dans le moyeu 40, et sensiblement immobilisée entre les deux secteurs angulaires pleins de la jante 41. L'anse 6 est donc libre de basculer vers la première position angulaire, dans un premier sens D1, de telle sorte que l'utilisateur peut saisir l'organe de préhension 5 et lui faire décrire une trajectoire ascendante en arc de cercle autour de l'embase 3.

Ce mouvement ascendant est avantageusement interrompu par la butée d'arrêt 13, lorsque les éléments saillant 13B des extrémités de l'anse 6 rencontrent les épaulements 13A ménagés dans l'embase 3, dans une position qui correspond de préférence à la première position angulaire de préhension.

Au cours de ce mouvement, l'anse 6 entraîne solidairement les tourillons 21, 22 formés à ses extrémités 6A, 6B, de telle sorte qu'elle amène progressivement le premier et le second logement d'appui 26, 31 en vis à vis de la direction de déplacement de la première et de la seconde clenche 25, 30.

La jante 41 s'efface ainsi peu à peu jusqu'à ce que lesdits logements d'appui 26, 31 se placent sensiblement dans l'alignement du coulisseau 35 et du rail 37, en ouvrant ainsi un passage suffisant pour libérer le mouvement des clenches.

Sous l'effet de la pression exercée par l'organe de précontrainte élastique 63, le coulisseau 35 est propulsé radialement vers l'extérieur de l'embase, la traverse 39 se comportant comme une barre d'attelage qui entraîne à sa suite les coulisseaux et projette ainsi les clenches, selon un mouvement de translation qui les amène à l'intérieur de leur logement d'appui respectif.

On obtient ainsi, par un mouvement d'engagement « *tout ou rien* », un double, et même un quadruple verrouillage particulièrement sûr.

Avantageusement, la portion active 11 et 12 desdites clenches pénètre dans lesdits logements d'appui, et plus particulièrement attaque la paroi du logement d'appui, en venant en contact surfacique contre le chant 43 de la jante 41, ce qui empêche tout mouvement de retour de l'organe de préhension 5 dans le sens de rotation opposé.

De préférence, l'encliquetage de la clenche dans son logement d'appui produit un déclic sonore qui signale à l'utilisateur que la poignée à atteint la position voulue et que le verrouillage est opérationnel.

De surcroît, le déplacement nécessaire au verrouillage fait de préférence jaillir la tête du bouton 16 en saillie bien visible par rapport à la surface externe de l'embase 3, ce qui fournit à l'utilisateur une indication visuelle du déclenchement des moyens de retenue 10.

En outre, le coulisseau 35 poursuit sa course jusqu'à ce que la première clenche 25 s'engage sur la rampe de rattrapage de jeu 44, ce qui permet d'accentuer légèrement la rotation de l'organe de préhension 5 dans le premier sens D1 de manière à le plaquer à la fois contre la première clenche 25 et la butée d'arrêt 13, de manière sensiblement serrée et sans jeu, en verrouillant ainsi l'organe de préhension 5 à l'encontre de tout déplacement dans le premier sens D1 et le second sens D2 opposé.

La poignée 1 se trouve alors verrouillée dans sa configuration redressée, illustrées notamment sur la partie gauche des figures 2 et 9, laquelle permet la préhension et la manipulation sans risque du récipient 2.

Une fois le récipient 2 utilisé et/ou nettoyé, l'utilisateur peut rabattre la ou les poignées 1 de manière à faciliter par exemple sa mise en place dans un lave-vaisselle ou son rangement.

Pour ce faire, il enfonce le bouton-poussoir 16 à l'encontre de l'organe de précontrainte élastique 63, ce qui a pour effet de manoeuvrer en retrait les clenches 25, 30 en les extrayant progressivement de leur logement d'appui 26, 31.

Une fois les clenches 25, 30 dégagées de leur logement d'appui respectif, et plus particulièrement une fois la première clenche 25 escamotée à l'intérieur du moyeu 40, aucun obstacle ne s'oppose à la rotation de la jante 41 et par conséquent du tourillon 21, dans le second sens D2, de telle sorte que l'utilisateur peut replier l'organe de préhension 25 par rotation descendante autour de l'embase 3, selon une trajectoire sensiblement inverse de la première.

Ainsi, la poignée conforme à l'invention permet de conférer une excellente ergonomie à tout type de récipient 2 de cuisine, tout en assurant une manipulation fiable et sûre dudit récipient.

En outre, de telles poignées présentent un excellent niveau de finition, un fonctionnement particulièrement intuitif, reproductible et durable.

Par ailleurs, la protection conférée par l'enveloppe de protection 20 conforme à l'invention permet non seulement de préserver le mécanisme des moyens de retenue 10, et plus globalement le mécanisme de la poignée 1 dans son ensemble, des agressions extérieures, mais également de protéger l'utilisateur, et plus particulièrement ses doigts, des parties mobiles des moyens de retenue 10.

Par ailleurs, la mise en oeuvre au sein d'une telle poignée d'un nombre réduit de pièces mécaniques, de formes relativement simples, permet de réduire significativement les coûts et les temps de fabrication, d'assemblage et le cas échéant de réparation.

### POSSIBILITE D'APPLICATION INDUSTRIELLE

La présente invention trouve notamment son application industrielle dans la conception et la fabrication de récipients de cuisine.

## Revendications

1. Poignée pivotante (1) pour récipient (2) de cuisine, ladite poignée (1) comprenant une embase de fixation (3) permettant de fixer ladite poignée sur la paroi (4) du récipient (2), ainsi qu'un organe de préhension (5) qui est maintenu à ladite embase de fixation au moyen d'au moins un premier tourillon (21) autour duquel il peut basculer alternativement d'une première position angulaire de préhension, dans laquelle il permet à un utilisateur de manipuler le récipient, à une seconde position angulaire de repos distincte de la première position angulaire, et inversement, ladite poignée étant pourvue d'au moins un premier verrou (25) monté mobile alternativement entre une position de verrouillage d'une part, dans laquelle il empêche l'organe de préhension (5) de passer de sa première position angulaire de préhension à sa seconde position angulaire de repos, et une position de libération d'autre part, distincte de la position de verrouillage, dans laquelle il autorise le passage de l'organe de préhension (5) de sa première à sa seconde position angulaire, ladite poignée étant **caractérisée en ce que** le premier tourillon (21) comporte un logement de dégagement (70) à l'intérieur duquel le premier verrou (25) peut se retirer, en opérant un transfert au moins partiel vers l'intérieur dudit logement de dégagement, afin de passer de sa position de verrouillage à sa position de libération en se déplaçant au moins selon une composante radiale sensiblement transverse à l'axe (XX') du premier tourillon (21) autour duquel s'opère le basculement de l'organe de préhension (5).

2. Poignée pivotante selon la revendication 1 **caractérisée en ce que** le premier tourillon (21) est solidaire du moyen de préhension (5), et de préférence formé d'un seul tenant avec ce dernier.

3. Poignée pivotante selon la revendication 1 ou 2 **caractérisée en ce que** le logement de dégagement (70) est formé par un évidement tubulaire pratiqué en bout dans le moyeu (40) du premier tourillon (21), sensiblement selon l'axe (XX') de ce dernier.

4. Poignée pivotante selon la revendication 3 **caractérisée en ce que** l'évidement du moyeu (40) est bordé par une jante (41), dans l'épaisseur de laquelle est creusé un premier logement d'appui (26) dans lequel le premier verrou (25) pénètre pour s'opposer au mouvement de rotation de l'organe de préhension (5) par rapport à l'embase (3), et dont ledit premier verrou (25) se retire pour libérer ledit mouvement de rotation.

5. Poignée pivotante selon la revendication 4 **caractérisée en ce que** le logement d'appui (26) est formé par une rainure longitudinale (42) qui fend la jante (41), à travers toute son épaisseur, jusqu'à l'extrémité dudit tourillon, selon une direction sensiblement parallèle à l'axe (XX') de ce dernier et **en ce que** la jante (41) présente un chant (43) qui borde la rainure (42), ledit chant (43) formant la paroi du logement d'appui (26) contre laquelle le premier verrou peut s'engager lorsqu'il se trouve en position de verrouillage et présentant une rampe de rattrapage de jeu (44).

6. Poignée pivotante selon l'une des revendications précédentes **caractérisée en ce que** le premier verrou (25) est porté par un coulisseau (35) guidé à translation dans l'embase (3).

7. Poignée pivotante selon la revendication 6 et l'une des revendications 4 ou 5, **caractérisée en ce que** le coulisseau comporte au moins une première languette sur laquelle fait saillie une protubérance formant le premier verrou (25), et **en ce que** ladite languette est disposée sensiblement en bout du tourillon de telle sorte que l'évidement tubulaire coiffe ladite première protubérance, cette dernière étant agencée pour s'inscrire à l'intérieur du moyeu sans faire obstacle à la rotation de la jante (41) lorsque le premier verrou (25) se trouve en position de libération.

8. Poignée pivotante selon la revendication 7 **caractérisée en ce que** la première languette comporte une seconde protubérance faisant saillie du même côté que la première protubérance et à distance de cette dernière afin de former un second verrou (30), et **en ce que** la jante (41) est fendue de part en part de sorte à former un premier et un second logement d'appui (26, 31) diamétralement opposés, afin que le déplacement du coulisseau (35) provoque l'engagement simultané du premier et du second verrou (25, 30) dans le premier et le second logement d'appui (26, 31), respectivement le dégagement simultané desdites portions actives de leurs logements d'appui.

9. Poignée pivotante selon la revendication 7 ou 8 **caractérisée en ce que** la poignée forme une anse (6) dont chacune des première et seconde extrémités (6A, 6B) s'articule sur l'embase au moyen respectivement d'un premier et d'un second tourillon (21, 22), et **en ce que** le coulisseau (35) comporte une seconde languette portant également au moins une, et de préférence deux protubérances formant un troisième et un quatrième verrou (25', 30') coopérant avec le second tourillon (22).

10. Poignée pivotante selon l'une des revendications précédentes **caractérisée en ce que** le ou les verrous (25, 30, 25', 30') sont commandés par un organe de commande (15) unique, distinct de l'organe de préhension (5) et actionnable par l'utilisateur.

11. Poignée pivotante selon les revendications 9 et 10 **caractérisé en ce que** l'organe de commande (15) comporte un bouton-poussoir (16) situé entre les extrémités (6A, 6B) de l'anse (6) et formant une traverse qui relie la première et la seconde languette.

12. Poignée pivotante (1) pour récipient (2) de cuisine, ladite poignée (1) comprenant une embase de fixation (3) permettant de fixer ladite poignée sur la paroi (4) du récipient (2), ainsi qu'un organe de préhension (5) qui est maintenu à ladite embase de fixation au moyen d'au moins un premier tourillon (21) autour duquel il peut basculer alternativement d'une première position angulaire de préhension, dans laquelle il permet à un utilisateur de manipuler le récipient, à une seconde position angulaire de repos distincte de la première position angulaire, et inversement, ladite poignée étant pourvue d'au moins un premier verrou (25) monté mobile alternativement entre une position de verrouillage d'une part, dans laquelle il empêche l'organe de préhension (5) de passer de sa première position angulaire de préhension à sa seconde position angulaire de repos, et une position de libération d'autre part, distincte de la position de verrouillage, dans laquelle il autorise le passage de l'organe de préhension (5) de sa première à sa seconde position angulaire, ladite poignée étant **caractérisée en ce que** le premier tourillon (21) comporte un logement de dégagement (70) à l'intérieur duquel le premier verrou (25) peut se retirer, en opérant un transfert au moins partiel vers l'intérieur dudit logement de dégagement, afin de passer de sa position de verrouillage à sa position de libération en se déplaçant au moins selon une composante axiale sensiblement parallèle à l'axe (XX') du premier tourillon (21) autour duquel s'opère le basculement de l'organe de préhension (5) et **en ce que** le premier tourillon (21) est solidaire de l'embase (3) et **en ce que** le verrou (25) peut alternativement rentrer et ressortir axialement en bout dudit premier tourillon (21) afin de venir en prise dans un logement d'appui (26) creusé dans l'organe de préhension (5) sensiblement dans le prolongement dudit tourillon, l'organe de préhension étant formé par une anse (6) dont les extrémités (6A, 6B) présentent des canons (28) s'enflant à libre rotation autour d'un premier et d'un second tourillon (21, 22) sensiblement coaxiaux et disposés de part et d'autre de l'embase, le logement d'appui (26) est formé par une empreinte creusée dans la paroi de fond d'un canon (28).

13. Poignée pivotante selon la revendication 12 **caractérisée en ce que**, le premier verrou (25) étant formé par une lame (50) sensiblement parallélépipédique qui se déplace selon une direction sensiblement parallèle à l'axe (XX') du tourillon (21), elle est pourvue de deux logements d'appui qui suivent des directions sécantes et forment une empreinte sensiblement cruciforme qui permet au verrou (25) de verrouiller l'organe de préhension (5) aussi bien dans sa première position angulaire de préhension que dans sa seconde position angulaire de repos.

14. Poignée pivotante selon l'une des revendications 12 à 13 **caractérisée en ce que** le premier verrou (25) est formé par une lame (50) sensiblement parallélépipédique qui se déplace selon une direction sensiblement parallèle audit l'axe (XX') du tourillon (21) et **en ce que** ledit verrou est placé sous la dépendance d'un organe de commande (15) comportant un bouton-poussoir (16) qui suit une trajectoire sensiblement radiale par rapport à l'axe du tourillon.

15. Récipient de cuisine (2) **caractérisé en ce qu'**il comporte au moins une poignée pivotante (1) selon l'une des revendications 1 à 14.

## Patentansprüche

1. Schwenkgriff (1) für ein Kochgefäß (2), wobei der Griff (1) einen Befestigungssockel (3) umfasst, der es ermöglicht, den Griff an der Wand (4) des Kochgefäßes (2) zu befestigen, sowie ein Greifelement (5), das am Befestigungssockel mit Hilfe mindestens eines ersten Drehzapfens (21) gehalten wird, um den es alternativ von einer ersten Winkelgreifposition, in der es einem Benutzer ermöglicht, das Gefäß zu bedienen, in eine zweite Winkelruheposition, die zu der ersten Winkelposition unterschiedlich ist, und umgekehrt schwenken kann, wobei der Griff mit mindestens einem ersten Riegel (25) versehen ist, der alternativ beweglich zwischen einer Verriegelungsposition einerseits, in der er das Greifelement (5) daran hindert, von seiner ersten Winkelgreifposition in seine Winkelruheposition überzugehen, und einer Freigabeposition, die sich von der Verriegelungsposition unterscheidet, in der er den Übergang des Greifelements (5) von seiner ersten in seine zweite Winkelposition gestattet, montiert ist, wobei der Griff **dadurch gekennzeichnet ist, dass** der erste Drehzapfen (21) eine Aufnahmelagerung (70) umfasst, in die sich der erste Riegel (25) einziehen kann, wobei ein zumindest teilweiser Einzug in das Innere der Aufnahmelagerung erfolgt, um von seiner Verriegelungsposition in seine Freigabeposition überzugehen, wobei er sich zumindest entlang einer radialen Komponente im Wesentlichen quer zur Achse (XX') des ersten Drehzapfens (21), um den das Schwenken des Greifelements (5) erfolgt, verschiebt.

2. Schwenkgriff nach Anspruch 1, **dadurch gekennzeichnet, dass** der erste Drehzapfen (21) mit dem Greifmittel (5) verbunden und vorzugsweise aus einem Stück mit diesem letztgenannten geformt ist.

3. Schwenkgriff nach Anspruch 1 oder 2, **dadurch gekennzeichnet, dass** die Aufnahmelagerung (70) von einer röhrenförmigen Ausnehmung gebildet ist, die am Ende in der Nabe (40) des ersten Drehzapfens (21) im Wesentlichen entlang der Achse (XX') dieses letztgenannten vorgesehen ist.

4. Schwenkgriff nach Anspruch 3, **dadurch gekennzeichnet, dass** die Ausnehmung der Nabe (40) von einem Kranz (41) umrahmt ist, in dessen Dicke eine erste Stützlagerung (26) ausgehöhlt ist, in die der erste Riegel (25) eindringt, um sich der Drehbewegung des Greifelements (5) in Bezug zum Sockel (3) zu wiedersetzen, und aus der sich der erste Riegel (25) zurückzieht, um die Drehbewegung freizugeben.

5. Schwenkgriff nach Anspruch 4, **dadurch gekennzeichnet, dass** die Stützlagerung (26) von einer Längsnut (42) gebildet ist, die den Kranz (41) über seine ganze Dicke bis zum Ende des Drehzapfens in eine Richtung im Wesentlichen parallel zur Achse (XX') dieser letztgenannten schlitzt, und dass der Kranz (41) eine Kante (43) aufweist, die die Nut (42) umrahmt, wobei die Kante (43) die Wand der Stützlagerung (26) bildet, an der der ersten Riegel eingreifen kann, wenn er sich in Verriegelungsposition befindet, wobei sie eine Rampe zur Spielnachstellung (44) aufweist.

6. Schwenkgriff nach einem der vorhergehenden Ansprüche, **dadurch gekennzeichnet, dass** der erste Riegel (25) von einer Gleitschiene (35) getragen wird, die in Translation in dem Sockel (3) geführt wird.

7. Schwenkgriff nach Anspruch 6 und einem der Ansprüche 4 oder 5, **dadurch gekennzeichnet, dass** die Gleitschiene mindestens eine erste Zunge umfasst, auf der eine Ausstülpung, die den ersten Riegel (25) bildet, vorspringt, und dass die Zunge im Wesentlichen am Ende des Drehzapfens angeordnet ist, so dass die röhrenförmige Ausnehmung an die erste Ausstülpung angrenzt, wobei diese letztgenannte derart angeordnet ist, dass sie sich in das Innere der Nabe einfügt, ohne die Drehung des Kranzes (41) zu behindern, wenn sich der erste Riegel (25) in Freigabeposition befindet.

8. Schwenkgriff nach Anspruch 7, **dadurch gekennzeichnet, dass** die erste Zunge eine zweite Ausstülpung umfasst, die auf derselben Seite wie die erste Ausstülpung vorspringt und in einem Abstand zu dieser letztgenannten angeordnet ist, um einen zweiten Riegel (30) zu bilden, und dass der Kranz (41) beiderseits geschlitzt ist, um eine erste und eine zweite Stützlagerung (26, 31), die einander diametral gegenüberliegen, zu bilden, damit die Verschiebung des Gleitschiebers (35) zum gleichzeitigen Eingreifen des ersten und des zweiten Riegels (25, 30) in die erste und zweite Stützlagerung (26, 31) bzw. zur gleichzeitigen Freigabe der aktiven Abschnitte aus ihren Stützlagerungen führt.

9. Schwenkgriff nach Anspruch 7 oder 8, **dadurch gekennzeichnet, dass** der Griff einen Henkel (6) umfasst, dessen erstes und zweites Ende (6A, 6B) jeweils auf dem Sockel mit Hilfe eines ersten bzw. eines zweiten Drehzapfens (21, 22) angelenkt ist, und dass der Gleitschieber (35) eine zweite Zunge umfasst, die ebenfalls mindestens eine und vorzugsweise zwei Ausstülpungen trägt, die einen dritten und einen vierten Riegel (25', 30') bilden, die mit dem zweiten Drehzapfen (22) zusammenwirken.

10. Schwenkgriff nach einem der vorhergehenden Ansprüche, **dadurch gekennzeichnet, dass** der oder die Riegel (25, 30, 25', 30') von einem einzigen Steuerelement (15), das vom Greifelement (5) getrennt und vom Benutzer betätigbar ist, gesteuert werden.

11. Schwenkgriff nach den Ansprüchen 9 und 10, **dadurch gekennzeichnet, dass** das Steuerelement (15) einen Druckknopf (16) umfasst, der sich zwischen den Enden (6A, 6B) des Henkels (6) befindet und eine Querstrebe bildet, die die erste und die zweite Zunge verbindet.

12. Schwenkgriff (1) für ein Kochgefäß (2), wobei der Griff (1) einen Befestigungssockel (3) umfasst, der es ermöglicht, den Griff an der Wand (4) des Kochgefäßes (2) zu befestigen, sowie ein Greifelement (5), das am Befestigungssockel mit Hilfe mindestens eines ersten Drehzapfens (21) gehalten wird, um den es alternativ von einer ersten Winkelgreifposition, in der es einem Benutzer ermöglicht, das Gefäß zu bedienen, in eine zweite Winkelruheposition, die zu der ersten Winkelposition unterschiedlich ist, und umgekehrt schwenken kann, wobei der Griff mit mindestens einem ersten Riegel (25) versehen ist, der alternativ beweglich zwischen einer Verriegelungsposition einerseits, in der er das Greifelement (5) daran hindert, von seiner ersten Winkelgreifposition in seine Winkelruheposition überzugehen, und einer Freigabeposition, die sich von der Verriegelungsposition unterscheidet, in der er den Übergang des Greifelements (5) von seiner ersten in seine zweite Winkelposition gestattet, montiert ist, wobei der Griff **dadurch gekennzeichnet ist, dass** der erste Drehzapfen (21) eine Aufnahmelagerung (70) umfasst, in die sich der erste Riegel (25) einziehen kann, wobei ein zumindest teilweiser Einzug in das Innere der Aufnahmelagerung erfolgt, um von seiner Verriegelungsposition in seine Freigabeposition überzugehen, wobei er sich zumindest entlang einer radialen Komponente im Wesentlichen quer zur Achse (XX') des ersten Drehzapfens (21), um den das Schwenken des Greifelements (5) erfolgt, verschiebt, und dass der erste Drehzapfen (21) mit dem Sockel (3) verbunden ist, und dass der Riegel (25) alternativ axial am Ende des ersten Drehzapfens (21) eingefahren oder ausgefahren werden kann, um in einer Stützlagerung (26) zum Eingriff zu gelangen, die in dem Greifelement (5) im Wesentlichen in der Verlängerung des Drehzapfens ausgehöhlt ist, wobei das Greifelement von einem Henkel (6) gebildet ist, dessen Enden (6A, 6B) Steckbuchsen (28) aufweisen, die sich frei drehbar um einen ersten und einen zweiten Drehzapfen (21, 22), die im Wesentlichen koaxial und beiderseits des Sockels angeordnet sind, schieben, wobei die Stützlagerung (26) von einer hohlen Vertiefung in der Bodenwand einer Steckbuchse (28) gebildet ist.

13. Schwenkgriff nach Anspruch 12, **dadurch gekennzeichnet, dass** er, da der erste Riegel (25) von einer im Wesentlichen parallelepipedischen Lamelle (50) gebildet ist, die sich in eine Richtung im Wesentlichen parallel zur Achse (XX') des Drehzapfens (21) verschiebt, mit zwei Stützlagerungen versehen ist, die Schnittrichtungen verfolgen und eine im Wesentlichen kreuzförmige Vertiefung bilden, die es dem Riegel (25) ermöglicht, das Greifelement (5) sowohl in seiner ersten Winkelgreifposition als auch in seiner zweiten Winkelruheposition zu verriegeln.

14. Schwenkgriff nach einem der Ansprüche 12 bis 13, **dadurch gekennzeichnet, dass** der erste Riegel (25) von einer im Wesentlichen parallelepipedischen Lamelle (50) gebildet ist, die sich in eine Richtung im Wesentlichen parallel zur Achse (XX') des Drehzapfens (21) verschiebt, und dass der Riegel in Abhängigkeit von einem Steuerelement (15), umfassend einen Druckknopf (16), das einer im Wesentlichen radialen Bahn in Bezug zur Achse des Drehzapfens folgt, angeordnet ist.

15. Kochgefäß (2), **dadurch gekennzeichnet, dass** es mindestens einen Schwenkgriff (1) nach einem der Ansprüche 1 bis 14 umfasst.

## Claims

1. A pivotally-mounted handle (1) for a kitchen vessel (2), said handle (1) comprising a fastening base (3) making it possible to fasten said handle to the wall (4) of the vessel (2), and a graspable member (5) that is held to said fastening base by means of at least a first stub axle (21) about which it can pivot in alternation from a graspable first angular position, in which it enables a user to manipulate the vessel, to a rest second angular position that is distinct from the first angular position, and vice versa, said handle being provided with at least a first latch (25) mounted to move in alternation between a locking position, in which it prevents the graspable member (5) from going from its graspable first angular position to its rest second angular position, and a releasing position that is distinct from the locking position and in which it allows the graspable member (5) to go from its first angular position to its second angular position, said handle being **characterized in that** the first stub axle (21) is provided with a disengagement recess (70) into which the first latch (25) can retract, by effecting an at least partial transfer towards the inside of said disengagement recess, in order to go from its locking position to its releasing position by moving at least in a radial component that is substantially transverse to the axis (XX') of the first stub axle (21) about which the graspable member (5) pivots.

2. A pivotally-mounted handle according to claim 1, **characterized in that** the first stub axle (21) is secured to or integral with the graspable means (5), and is preferably formed integrally in one piece therewith.

3. A pivotally-mounted handle according to claim 1 or claim 2, **characterized in that** the disengagement recess (70) is formed by a tubular cavity, of the sleeve type, provided at the end in the hub (40) of the first stub axle (21), substantially along the axis (XX') thereof.

4. A pivotally-mounted handle according to claim 3, **characterized in that** the cavity in the handle (40) is edged by a rim (41), in the thickness of which a first abutment recess (26) is provided into which the first latch (25) penetrates to oppose movement in rotation of the graspable member (5) relative to the base (3), and from which said first latch (25) retracts to release said movement in rotation.

5. A pivotally-mounted handle according to claim 4, **characterized in that** the abutment recess (26) is formed by a longitudinal groove (42) that splits the rim (41), through the entire thickness thereof, to the end of said stub axle, in a direction that is substantially parallel to the axis (XX') thereof, and **in that** the rim (41) presents an edge face (43) edging the groove (42), said edge face (43) forming the wall of the abutment recess (26) against which the first latch can engage when it is in the locking position and having a clearance-takeup ramp (44).

6. A pivotally-mounted handle according to any preceding claim, **characterized in that** the first latch (25) is carried by a slide (35) guided in translation in the base (3).

7. A pivotally-mounted handle according to claim 6 and to any one of claims 4 or 5, **characterized in that** the slide includes at least a first tongue from which a protuberance forming the first latch (25) projects, and **in that** said tongue is disposed substantially at the end of the stub axle so that the tubular cavity fits over said first protuberance, which is arranged to fit within the hub without forming any obstacle to movement in rotation of the rim (41) when the first latch (25) is in the releasing position.

8. A pivotally-mounted handle according to claim 7, **characterized in that** the first tongue is provided with a second protuberance projecting from the same side as the first protuberance and at some distance therefrom in order to form a second latch (30), and **in that** the rim (41) is split from one side to the other to form first and second abutment recesses (26, 31) that are diametrically opposite, so that the slide (35) moving causes the first and second latches (25, 30) to engage simultaneously into the first and second abutment recesses (26, 31), or, respectively, causes said active portions to disengage simultaneously from their abutment recesses.

9. A pivotally-mounted handle according to claim 7 or 8, **characterized in that** the handle forms a loop (6) having each of its first and second ends (6A, 6B) hinged to the base by means of a respective one of first and second stub axles (21, 22), and **in that** the slide (35) is provided with a second tongue also carrying at least one and preferably two protuberances forming third and fourth latches (25', 30') co-operating with the second stub axle (22).

10. A pivotally-mounted handle according to any preceding claim, **characterized in that** the latch(es) (25, 30, 25', 30') are controlled by a single, common control member (15) that is distinct from the graspable member (5) and that is actuatable by the user.

11. A pivotally-mounted handle according to claims 9 and 10, **characterized in that** the control member (15) includes a push-button (16) situated between the ends (6A, 6B) of the loop (6) and forming a cross-piece that interconnects the first and second tongues.

12. A pivotally-mounted handle (1) for a kitchen vessel (2), said handle (1) comprising a fastening base (3) making it possible to fasten said handle to the wall (4) of the vessel (2), and a graspable member (5) that is held to said fastening base by means of at least a first stub axle (21) about which it can pivot in alternation from a graspable first angular position, in which it enables a user to manipulate the vessel, to a rest second angular position that is distinct from the first angular position, and vice versa, said handle being provided with at least a first latch (25) mounted to move in alternation between a locking position, in which it prevents the graspable member (5) from going from its graspable first angular position to its rest second angular position, and a releasing position that is distinct from the locking position and in which it allows the graspable member (5) to go from its first angular position to its second angular position, said handle being **characterized in that** the first stub axle (21) is provided with a disengagement recess (70) into which the first latch (25) can retract, by effecting an at least partial transfer towards the inside of said disengagement recess, in order to go from its locking position to its releasing position by moving at least in an axial component that is substantially parallel to the axis (XX') of the first stub axle (21) about which the graspable member (5) pivots and **in that** the first stub axle (21) is secured to the base (3) and **in that** the latch (25) may, in alternation, retract and deploy axially at the end of said first stub axle (21) in order to come into engagement in an abutment recess (26) provided in the graspable member (5) substantially in alignment with said stub axle the graspable member being formed by a loop (6) having its ends (6A, 6B) provided with bushes (28) fitting freely rotatably over respective ones of first and second stub axles (21, 22) that are substantially in alignment and that are disposed on either side of the base, the abutment recess (26) is formed by an indent provided in the end wall of a bush (28).

13. A pivotally-mounted handle according to claim 12, **characterized in that**, with the first latch (25) being formed by a blade (50) that is substantially rectangular block shaped and that moves in a direction substantially parallel to the axis (XX') of the stub axle (21), it is provided with two abutment recesses that follow intersecting directions and that form a substantially cross-shaped indent enabling the latch (25) to lock the graspable member (5) both in its graspable first angular position and in its rest second angular position.

14. A pivotally-mounted handle according to any one of claims 12 to 13, **characterized in that** the first latch (25) is formed by a blade (50) that is substantially rectangular block shaped and that moves in a direction that is substantially parallel to said axis (XX') of the stub axle (21), and **in that** said latch is placed under the dependence of a control member (15) including a push-button (16) that follows a path that is substantially radial relative to the axis of the stub axle.

15. A kitchen vessel (2), **characterized in that** it includes at least one pivotally-mounted handle (1) according to any one of claims 1 to 14.
